# EUROPEAN PATENT SPECIFICATION

(11) **EP 3 396 687 B1**
(45) Date of publication and mention of the grant of the patent: **09.04.2025**
(21) Application number: 17168735.3
(22) Date of filing: 28.04.2017
(51) Int. Cl.: H01F 27/34, H01F 27/38, H01F 27/42, H02M 1/00, H02M 5/00, H02J 3/18, H02P 13/06

(54) **ENERGIZING METHOD OF A TRANSFORMER, AND TRANSFORMER CONNECTION ASSEMBLY**
ANTRIEBSVERFAHREN EINES TRANSFORMATORS UND VERBINDUNGSANORDNUNG FÜR TRANSFORMATOR
PROCÉDÉ D'EXCITATION D'UN TRANSFORMATEUR ET ENSEMBLE DE CONNEXION DE TRANSFORMATEUR

(43) Date of publication of application: 31.10.2018
(73) Proprietor: Hitachi Energy Ltd, 8050 Zürich (CH)
(72) Inventor: Zueger, Harry, 1217 Châtelaine/Genève (CH); Isler, Stephane, 74130 Faucigny (FR); Chaudhuri, Toufann, 1110 Morges (CH); Cuenin, Yann, 1969 Saint-Martin (CH); Alphand, Yoann, 67640 Fegersheim (FR)
(74) Representative: Epping - Hermann - Fischer

(56) References cited:
- EP-A1- 1 198 050
- EP-A1- 2 608 239
- WO-A1-2016/082704
- US-A1- 2013 175 879

## Description

### TECHNICAL FIELD

Aspects of the present disclosure relate generally to an energizing method of a transformer, and to a transformer connection assembly having an energizing controller configured to perform an energizing method.

### BACKGROUND ART

In a transformer, for example a traction transformer used in electric railway propulsion vehicles (rolling stock) such as locomotive or rail coaches, a transient high inrush current flows upon connection of the transformer to a supply voltage when the transformer is in an unenergized, or unmagnetized, state. The high inrush current flows as a result from a magnetic saturation in the transformer core. During the further regular operation of the transformer, the core is sufficiently magnetized, and the current flowing into the primary side during the regular operation is usually not nearly as high as a possible inrush current.

Supply systems upstream of the point of connection of the supply voltage to the primary side of the transformer may comprise protection installations for limiting a current which exceeds a certain value. For example, such protection installations can disconnect the supply voltage immediately in the case that the inrush current is too high. Due to the transient nature of the inrush current, also a DC component is induced on the supply side of the installation, which can make some protection installations to operate, i. e. to disrupt the connection.

The inrush current is limited by the coil impedance on the primary side. Some transformers have multiple groups of primary-side coils connected in parallel. Thus, the equivalent impedance of the coil groups may become relatively low, which further raises the transient amplitude of an inrush current upon connecting an unenergized transformer to the supply voltage.

Conventional methods and installations for limiting an inrush current of a transformer include an introduction of an air gap into the magnetic core, synchronizing the time of connection to a phase of the supply voltage, and/or a pre-energization by auxiliary circuits.

Introducing an air gap involves the use of a special clamping structure for the magnetic core having the air gap, which is more complex and costly than a standard stacked core.

A synchronization to the phase of the primary-side voltage is a costly and complex approach, since a proper measurement of the phase and a fast controlled switching is involved. Likewise, an auxiliary circuit for pre-energizing the core needs space for the auxiliary windings, and a connection operation involves several steps which have to be carried out by various devices. Document WO 2016/082704 A1 describes an on-load voltage regulation tap switch for a transformer. A switch control circuit controls main switches and auxiliary switches to act in a certain time sequence so as to complete a switching of the transformer windings.

### SUMMARY OF THE DISCLOSURE

An object of the invention is to provide a simplified energizing method for a transformer and/or to provide a simplified transformer connection assembly, each being cost-efficient and reliably suppressing an inrush current to an allowable amount.

In view of the above, an energizing method according to claim 1, and a transformer connection assembly according to claim 10 are provided.

According to a first aspect of the invention, an energizing method of a transformer is provided. The transformer comprises at least two groups of coils forming primary transformer windings, all of coils that form the at least two groups of coils being connected or connectible in parallel to each other, and at least one secondary transformer winding.

The windings are typically arranged on a common transformer core, e.g. made of a ferromagnetic material such as iron, in order to magnetically couple the primary transformer windings to the at least one secondary transformer winding. In embodiments, the transformer core is a gapless core, i. e. a core in which no functional air gap for intendedly enhancing the reluctance in the magnetic circuit of the transformer, is provided.

In an embodiment of the present invention, first a supply voltage is supplied to a first number of the groups of coils for a predetermined amount of time. The first number of coils is less than the entirety of groups of coils. By supplying the supply voltage to the first number of the groups of coils, a common magnetic flux is passed through the groups of coils.

After the predetermined amount of time has passed, the supply voltage is supplied to the entirety of groups of coils. In the following, supplying the supply voltage to the entirety of groups of coils is referred to as a "nominal operation" of the transformer. The nominal operation of the transformer usually is a standard operation of the transformer, i. e. an operation or operational state in which the rated values of the transformer are achieved. In the standard operation, none of the groups of coils are inoperational within the meaning that there are no coils on the primary side that are used solely in a distinct pre-magnetization operation such as in an auxiliary pre-magnetizing circuit.

By a method as described herein, the inrush current is reliably limited to a non-excessive amount, and devices such as protection devices can be prevented from erroneously being activated due to an inrush current upon connecting a transformer to a supply voltage. By a configuration as described herein, a space-consuming and complex auxiliary pre-magnetizing circuit need not be provided. Furthermore, a complex phase synchronization of a switching time or connection time is dispensable. The method may help to achieve reliable results without having to pay attention to a phase of the supply voltage at any point in time.

According to an embodiment of the invention, the groups of coils each may comprise a same amount of coil windings. A first number of groups of coils being less than the entirety of groups of coils may be just one group of coils less than the entirety of groups. The first number may, of course, be two or more groups of coils less than the entirety of groups.

The first number may be selected according to an equivalent impedance of the first number of groups of coils, such that when supplying the supply voltage having a predetermined amplitude to the first number of the groups of coils in a substantially unenergized (unmagnetized) state, a predetermined inrush AC current is not exceeded and/or DC component requirements are met.

The predetermined amplitude of the supply voltage is optionally a root mean square amplitude of a single-phase AC electric supply voltage.

The predetermined inrush current is typically selected such that a rated current or a specificied maximum transient current of primary-side electrical components is not exceeded, and/or or DC component requirements are met. Examples of primary-side electrical components include, but are not limited to, protection devices arranged to interrupt an excessive current flowing into the primary side of the transformer.

According to the invention, the predetermined amount of time for supplying the supply voltage to the first number of the groups of coils is selected such that a sufficient magnetic energization (i.e. a sufficient magnetization) of the groups of coils forming the primary transformer windings can be reasonably assumed.

A sufficient magnetic energization may be assumed, for example, when in a given transformer, the common magnetic flux, which is caused by supplying the supply voltage to the first number of the groups of coils, has reached at least 50% or at least 60% or at least 70% of a magnetic flux during the nominal operation of the transformer.

Alternatively, a sufficient magnetic energization may be assumed, for example, when in a given transformer the current that flows into the first number of groups of coils has substantially reached a steady state.

It is to be noted that the exemplary conditions for a sufficient magnetic energization are merely examples, and that neither of the technical quantities taken as an example (e. g. the amount of the common magnetic flux, the current flowing into the first number of groups of coils) needs to be actually measured. In a given transformer, the conditions may be pre-calculated, and a reasonable value may be specified for the predetermined amount of time of supplying the first voltage to the first number of the groups of coils.

A non-limiting example for the predetermined amount of time of supplying the first voltage to the first number of the groups of coils, when using the method in energizing a typical traction transformer of an AC electric train, is, for example, more than 0.04 seconds and less than 5 seconds. In certain applications, e. g. when a ratio of the first number of groups of coils to the entirety of groups of coils is particularly low in order to limit the inrush current to a particularly low value, the predetermined amount of time may however be in a range of up to 30 seconds, for example.

According to further aspects of the invention, the supply voltage to be supplied to the entirety of the groups of coils is a supply voltage from the same voltage source as the supply voltage, which is to be supplied to less than the entirety of the groups of coils. Alternatively or additionally, the supply voltage to be supplied to the entirety of the groups of coils is the same supply voltage, in amplitude and phase, as the supply voltage which is to be supplied to less than the entirety of the groups of coils.

The supply voltage from the same voltage source and/or the same supply voltage may simply be switched, when transitioning from the method step of supplying the supply voltage to the first number of the groups of coils to the method step of supplying the supply voltage to the entirety of the groups of coils. The inrush current is reliably limited, and due to magnetizing the groups of coils by passing the common magnetic flux in the method step of supplying the supply voltage to the first number of the groups of coils, no further inrush current will be produced by the subsequent method step(s).

According to further aspects of the invention, supplying the supply voltage to the first number of the groups of coils involves switching a voltage from a voltage terminal to the first number of coils. Additionally, supplying the supply voltage to the entirety of the groups of coils involves switching a voltage from a voltage terminal to the entirety of the groups of coils. Switching the supply voltage from the voltage terminal for performing the method involves a controlled operation.

According to further aspects of the invention, a transition from supplying the supply voltage to less than the entirety of the groups of coils for a predetermined amount of time to supplying the supply voltage to the entirety of the groups of coils is performed in an unsynchronized manner with respect to the phase of the supply voltage. A phase of the supply need not be taken care of when transitioning from one stage of the method to the other, e. g. when switching the voltage from the voltage terminal to the entirety of the groups of coils after the predetermined amount of time has passed. Without any complex phase synchronization, the inrush current in the first stage of the method is reliably limited, and no further inrush current will be produced in the subsequent stage of the method.

According to further aspects of the invention, the groups of coils each have the same number of coil windings. This allows for a particularly simple configuration, while yet suppressing the inrush current in a reliable manner. It is however noted, that according to other aspects of the invention, the groups of coils may have different numbers of coil windings.

According to further aspects of the invention, a ratio of the first number of groups of coils to the entirety (i.e. entire number) of groups of coils is less than 1, optionally less than 1/12 or 1/16 or less than 1/16. In this way, the inrush current may be limited to a particularly low value; yet, due to the common magnetic flux caused in the first stage of the method, a further inrush current occurring when transitioning to the nominal operation of the transformer is suppressed.

According to the invention, a transformer connection assembly comprises a transformer having at least two groups of coils forming primary transformer windings, all of coils that form the at least two groups (5a, 5b) of coils being connected or connectible in parallel to each other, and at least one secondary transformer winding. The groups of coils are arranged on the transformer such that in an operational state of the transformer, the groups of coils are passed through by a common magnetic flux. The transformer connection assembly further comprises a first switch, wherein in a closed state of the first switch, a supply voltage terminal is connected to a first number of the groups of coils, the first number being less than the entirety or entire number of groups of coils. The transformer connection assembly further comprises a second switch, wherein in a closed state of the second switch, the supply voltage terminal is connected to the entirety of the groups of coils. Furthermore, the transformer connection assembly comprises an energizing controller. The energizing controller is configured to perform an energizing method as described herein.

According to further aspects of the invention, in a method disclosed herein or a transformer connection assembly disclosed herein, the transformer is a single-phase transformer. Optionally, the single-phase transformer is a traction transformer for an electric train traction device, also known as rolling stock. Alternatively, in a method disclosed herein or a transformer connection assembly disclosed herein, the transformer is a multi-phase transformer, optionally a distribution transformer. According to further aspects of the invention, in a method disclosed herein or a transformer connection assembly disclosed herein, the transformer is an insulation transformer.

### BRIEF DESCRIPTION OF THE DRAWINGS

The invention will be described in greater detail with reference to the accompanying drawings, in which:

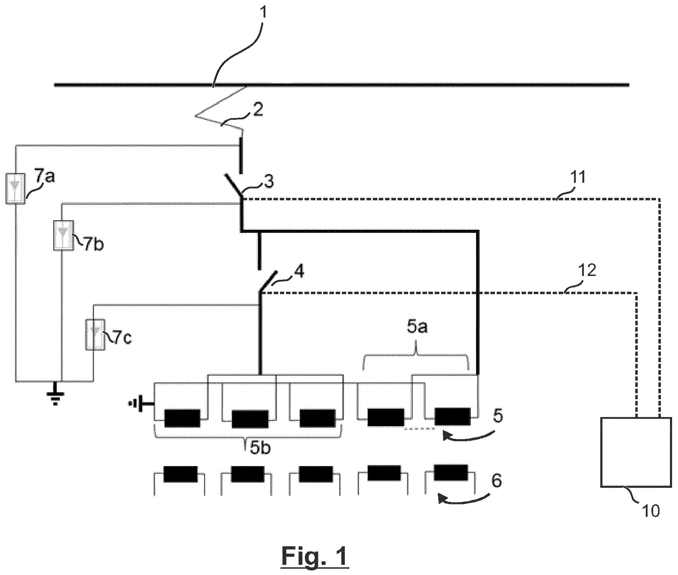

Fig. 1 is a schematic view of a transformer connection assembly for illustrating an embodiment.

### EMBODIMENTS OF THE INVENTION

Reference will now be made in detail to various aspects and embodiments of the invention. Each aspect and embodiment is provided by way of explanation and is not intended as a limitation. Features illustrated or described as a part of one aspect or embodiment may be used in conjunction with any other aspect or embodiment. It is intended that the present disclosure of the invention includes such combinations and modifications.

In a schematic representation of a transformer connection assembly of Fig. 1 for describing an embodiment of the invention, a transformer comprises a primary transformer winding 5 on the primary side of the transformer and a secondary transformer winding 6 on the secondary side of the transformer.

In Fig. 1, the secondary transformer winding 6 comprises multiple coils, but is not limited thereto. However, the primary transformer winding 5 has at least two groups 5a, 5b of coils which, in their entirety, form the primary transformer winding.

The transformer typically comprises a core (not shown) on which the primary and secondary transformer windings 5, 6 are wound. The at least two groups 5a, 5b of coils forming the primary transformer winding are arranged and configured such that in an operational state of the transformer, the groups 5a, 5b are passed through by a common magnetic flux. In the example of Fig. 1 and in accordance with the claimed invention, all of coils that form the groups 5a, 5b of coils are connected or connectible in parallel to each other. Thus, the equivalent impedance of the entirety 5a, 5b of the groups of coils becomes low, when being commonly connected in parallel.

The transformer may, for example, be a traction transformer used in an AC electric train. The traction transformer may be suited to accommodate different primary-side voltages (supply voltages) and different primary-side frequencies, such as voltages of up to 25 kV and having frequencies of 16.7 Hz up to 50 Hz, for example.

In the example of Fig. 1, the primary side of the transformer is connectible to a catenary 1 via a pantograph 2. The pantograph 2 in Fig. 1 serves as a supply voltage terminal for supplying a supply voltage to the primary side of the transformer.

A first switch 3 and a second switch 4 are provided. The first switch 3 may typically be a main circuit breaker 3, and the second switch 4 may be an auxiliary switching device 4. The first and second switches 3, 4 have a rated voltage corresponding to or exceeding the voltage at the supply voltage terminal, e. g. a rated voltage of 15 kV or a rated voltage of 25 kV.

The first switch 3 is connected such that in a closed state, the supply voltage terminal is connected to a first number 5a of the groups 5a, 5b of coils, such that the first number 5a is supplied with the supply voltage. The first number 5a of the groups 5a, 5b of coils is less than the entirety or entire number of the groups 5a, 5b of coils; in the non-limiting example of Fig. 1, the first number 5a has a value of two, and the entirety of groups 5a, 5b amounts to five. That is, in the non-limiting example of Fig. 1, a ratio of the first number 5a to the entirety 5a, 5b has a value of 2/5. The second switch 4 is connected such that in a closed state of the second switch 4 (in the non-limiting example of Fig. 1, in connection with a closed state of the first switch 3 serving as the main circuit breaker), the supply voltage terminal is connected to the entirety 5a, 5b of the groups of coils.

It is noted that arranging the first switch 3 and the second switch 4 on the high-voltage side, i. e. on the side of the groups 5a, 5b forming the primary transformer windings, is only a non-limiting exemplary embodiment. As an alternative, the first and second switches 3, 4 may also be arranged on the transformer output side. Switches 3, 4 arranged on the output side of the transformer may have a lower voltage rating than switches 3, 4 arranged on the high-voltage side, and thus may be comparatively cheaper.

An energizing controller 10 is provided to perform a selective switching, via a first switching line 11 and a second switching line 12, of the first and second switches 3, 4, respectively. The energizing controller is adapted to perform an energizing method as described herein.

Starting from an open state of both switches 3, 4, in the embodiment, the energizing controller 10 first controls the first switch 3 to close (i.e. to close contacts). This closing operation may be performed irrespective of the phase of the voltage at the time of closing. The supply voltage is then supplied to the first number 5a of the groups of coils, which are connected in parallel to each other, but not to the entirety 5a, 5b of coils. The transient inrush current is limited by the limited equivalent impedance of the first number 5a of the groups of coils. However, in the magnetic circuit, also the rest of the coils 5b is passed through by the common magnetic flux caused by the supply of the supply voltage to the first number 5a of the groups of coils. Thus, all coils 5a, 5b are pre-energized or pre-magnetized by the magnetic flux, so that their voltages have the same amplitude and the same phase as that of the first number 5a of the groups of coils.

The energizing controller 10 keeps this state of a closed first switch 3, until a sufficient pre-magnetization of all coils on the primary side can reasonably be assumed. In the non-limiting example, the energizing controller 10 keeps the state for a delay time of approximately 1 second.

Next, the energizing controller 10 controls the second switch 4 to close (i.e. to close contacts). This closing operation may be performed irrespective of the phase of the voltage at the time of closing. Thereby, all coils 5a, 5b on the primary side are connected in parallel, and all coils 5a, 5b on the primary side are supplied with the supply voltage. Substantially no further inrush current will occur, due to equal phase and amplitude in all coil groups 5a, 5b at this point in time, and auto-synchronization of the same supply voltage, which passes both the first switch 3 and the second switch 4, will occur.

The same principle is applicable using several (i.e. more than two) groups of coils that are each connected to their own high-voltage bushing. In Fig. 1, as an additional exemplary feature, surge arresters 7a, 7b, 7c are installed. The surge arresters 7a, 7b, 7c help to avoid unwanted resonance effects and/or local over-voltages.

## Claims

1. An energizing method of a transformer, the transformer comprising at least two groups (5a, 5b) of coils forming primary transformer windings (5), all of coils that form the at least two groups (5a, 5b) of coils are connected or connectible in parallel to each other, and at least one secondary transformer winding (6), wherein the method comprises in the stated order:
a. Supplying a supply voltage to a first number (5a) of the groups (5a, 5b) of coils for a predetermined amount of time, the first number (5a) being less than the entirety of groups (5a, 5b) of coils, thereby passing a common magnetic flux through the groups (5a, 5b) of coils; and
b. Supplying the supply voltage to the entirety of the groups (5a, 5b) of coils.

2. The method of claim 1, wherein the supply voltage to be supplied to the entirety of the groups (5a, 5b) of coils is a supply voltage from the same voltage source as the supply voltage, which is to be supplied to less than the entirety of the groups (5a, 5b) of coils.

3. The method of any one of the preceding claims, wherein the supply voltage to be supplied to the entirety of the groups (5a, 5b) of coils is the same supply voltage, in amplitude and phase, as the supply voltage which is to be supplied to less than the entirety of the groups (5a, 5b) of coils.

4. The method of any one of the preceding claims, wherein supplying the supply voltage to the first number (5a) of the groups (5a, 5b) of coils involves switching a voltage from a voltage terminal to the first number (5a) of coils; and
wherein supplying the supply voltage to the entirety of the groups (5a, 5b) of coils involves switching a voltage from a voltage terminal to the entirety of the groups (5a, 5b) of coils.

5. The method of any one of the preceding claims, wherein a transition from supplying the supply voltage to less than the entirety of the groups (5a, 5b) of coils for a predetermined amount of time to supplying the supply voltage to the entirety of the groups (5a, 5b) of coils is performed in an unsynchronized manner with respect to the phase of the supply voltage.

6. The method of any one of the preceding claims, wherein the groups (5a, 5b) of coils each have the same number of coil windings.

7. The method of any one of the preceding claims, wherein a ratio of the first number (5a) of groups of coils to the entirety of groups (5a, 5b) of coils is less than 1 or less than 1/12 or less than 1/16.

8. The method of any one of the preceding claims, wherein supplying the supply voltage to
the entirety of the groups (5a, 5b) of coils is an operation or operational state in which the rated values of the transformer are achieved.

9. The method of any one of the preceding claims, wherein the predetermined amount of time is within a range of 0.04 seconds to 5 seconds, or alternatively is within a range of up to 30 seconds.

10. A transformer connection assembly, comprising:
a transformer having at least two groups (5a, 5b) of coils forming primary transformer windings (5), all of coils that form the at least two groups (5a, 5b) of coils are connected or connectible in parallel to each other, and at least one secondary transformer winding (6), wherein the groups (5a, 5b) of coils are arranged on the transformer, such that in an operational state of the transformer the groups of coils are passed through by a common magnetic flux;
a first switch (3), wherein in a closed state of the first switch (3) a supply voltage terminal (2) is connected to a first number (5a) of the groups of coils, the first number (5a) being less than the entirety of groups (5a, 5b) of coils;
a second switch (4), wherein in a closed state of the second switch (4) the supply voltage terminal (2) is connected to the entirety (5a, 5b) of the groups of coils;
an energizing controller (10) configured to perform the method according to any one of the preceding claims 1 to 9.

11. The transformer connection assembly according to claim 10, wherein the transformer is a single-phase transformer or a traction transformer or a traction transformer for an electric train traction device.

12. The transformer connection assembly according to claim 10, wherein the transformer is an insulation transformer.

13. The transformer connection assembly according to claim 10, wherein the transformer is a multi-phase transformer or a distribution transformer.

## Patentansprüche

1. Bestromungsverfahren eines Transformators, wobei der Transformator mindestens zwei Gruppen (5a, 5b) von Spulen, die primäre Transformatorwicklungen (5) bilden, wobei alle Spulen, die die mindestens zwei Gruppen (5a, 5b) von Spulen bilden, parallel zueinander verbunden oder verbindbar sind, und mindestens eine sekundäre Transformatorwicklung (6) umfasst, wobei das Verfahren in der angegebenen Reihenfolge Folgendes umfasst:
a. Zuführen einer Versorgungsspannung an eine erste Anzahl (5a) der Gruppen (5a, 5b) von Spulen für eine vorbestimmte Zeitdauer, wobei die erste Anzahl (5a) kleiner als die Gesamtheit von Gruppen (5a, 5b) von Spulen ist, wodurch ein gemeinsamer magnetischer Fluss durch die Gruppen (5a, 5b) von Spulen geleitet wird; und
b. Zuführen der Versorgungsspannung an die Gesamtheit der Gruppen (5a, 5b) von Spulen.

2. Verfahren nach Anspruch 1, wobei die Versorgungsspannung, die der Gesamtheit der Gruppen (5a, 5b) von Spulen zugeführt werden soll, eine Versorgungsspannung von derselben Spannungsquelle ist wie die Versorgungsspannung, die weniger als der Gesamtheit der Gruppen (5a, 5b) von Spulen zugeführt werden soll.

3. Verfahren nach einem der vorhergehenden Ansprüche, wobei die Versorgungsspannung, die der Gesamtheit der Gruppen (5a, 5b) von Spulen zugeführt werden soll, hinsichtlich Amplitude und Phase die gleiche Versorgungsspannung ist wie die Versorgungsspannung, die weniger als der Gesamtheit der Gruppen (5a, 5b) von Spulen zugeführt werden soll.

4. Verfahren nach einem der vorhergehenden Ansprüche, wobei das Zuführen der Versorgungsspannung an die erste Anzahl (5a) der Gruppen (5a, 5b) von Spulen Schalten einer Spannung von einem Spannungsanschluss zu der ersten Anzahl (5a) von Spulen beinhaltet; und
wobei das Zuführen der Versorgungsspannung an die Gesamtheit der Gruppen (5a, 5b) von Spulen Schalten einer Spannung von einem Spannungsanschluss zu der Gesamtheit der Gruppen (5a, 5b) von Spulen beinhaltet.

5. Verfahren nach einem der vorhergehenden Ansprüche, wobei ein Übergang vom Zuführen der Versorgungsspannung an weniger als die Gesamtheit der Gruppen (5a, 5b) von Spulen für eine vorbestimmte Zeitdauer zum Zuführen der Versorgungsspannung an die Gesamtheit der Gruppen (5a, 5b) von Spulen in Bezug auf die Phase der Versorgungsspannung unsynchronisiert durchgeführt wird.

6. Verfahren nach einem der vorhergehenden Ansprüche, wobei die Gruppen (5a, 5b) von Spulen jeweils die gleiche Anzahl von Spulenwicklungen aufweisen.

7. Verfahren nach einem der vorhergehenden Ansprüche, wobei ein Verhältnis der ersten Anzahl (5a) von Gruppen von Spulen zu der Gesamtheit von Gruppen (5a, 5b) von Spulen kleiner als 1 oder kleiner als 1/12 oder kleiner als 1/16 ist.

8. Verfahren nach einem der vorhergehenden Ansprüche, wobei das Zuführen der Versorgungsspannung an die Gesamtheit der Gruppen (5a, 5b) von Spulen ein Arbeits- oder Betriebszustand ist, in dem die Nennwerte des Transformators erreicht werden.

9. Verfahren nach einem der vorhergehenden Ansprüche, wobei die vorbestimmte Zeitdauer innerhalb eines Bereichs von 0,04 Sekunden bis 5 Sekunden liegt oder alternativ innerhalb eines Bereichs von bis zu 30 Sekunden liegt.

10. Transformatorverbindungsbaugruppe, die Folgendes umfasst:
einen Transformator mit mindestens zwei Gruppen (5a, 5b) von Spulen, die primäre Transformatorwicklungen (5) bilden, wobei alle Spulen, die die mindestens zwei Gruppen (5a, 5b) von Spulen bilden, parallel zueinander verbunden oder verbindbar sind, und mindestens einer sekundären Transformatorwicklung (6), wobei die Gruppen (5a, 5b) von Spulen so auf dem Transformator angeordnet sind, dass in einem Betriebszustand des Transformators ein gemeinsamer magnetischer Fluss durch die Gruppen von Spulen geleitet wird;
einen ersten Schalter (3), wobei in einem geschlossenen Zustand des ersten Schalters (3) ein Versorgungsspannungsanschluss (2) mit einer ersten Anzahl (5a) der Gruppen von Spulen verbunden ist, wobei die erste Anzahl (5a) kleiner als die Gesamtheit von Gruppen (5a, 5b) von Spulen ist;
einen zweiten Schalter (4), wobei in einem geschlossenen Zustand des zweiten Schalters (4) der Versorgungsspannungsanschluss (2) mit der Gesamtheit (5a, 5b) der Gruppen von Spulen verbunden ist;
eine Bestromungssteuerung (10), die dazu ausgelegt ist, das Verfahren nach einem der vorhergehenden Ansprüche 1 bis 9 durchzuführen.

11. Transformatorverbindungsbaugruppe nach Anspruch 10, wobei der Transformator ein Einphasentransformator oder ein Traktionstransformator oder ein Traktionstransformator für eine elektrische Zugvorrichtung ist.

12. Transformatorverbindungsbaugruppe nach Anspruch 10, wobei der Transformator ein Isolationstransformator ist.

13. Transformatorverbindungsbaugruppe nach Anspruch 10, wobei der Transformator ein Mehrphasentransformator oder ein Verteilungstransformator ist.

## Revendications

1. Procédé d'excitation d'un transformateur, le transformateur comprenant au moins deux groupes (5a, 5b) de bobines formant des enroulements primaires de transformateur (5), la totalité des bobines qui forment lesdits au moins deux groupes (5a, 5b) de bobines étant connectées ou connectables en parallèle les unes aux autres, et au moins un enroulement secondaire de transformateur (6), dans lequel le procédé comprend, dans l'ordre indiqué :
a. La fourniture d'une tension d'alimentation à un premier nombre (5a) des groupes (5a, 5b) de bobines pendant une durée prédéterminée, le premier nombre (5a) étant inférieur à l'ensemble des groupes (5a, 5b) de bobines, faisant ainsi passer un flux magnétique commun à travers les groupes (5a, 5b) de bobines ; et
b. La fourniture de la tension d'alimentation à l'ensemble des groupes (5a, 5b) de bobines.

2. Procédé selon la revendication 1, dans lequel la tension d'alimentation devant être fournie à l'ensemble des groupes (5a, 5b) de bobines est une tension d'alimentation provenant de la même source de tension que la tension d'alimentation qui doit être fournie à moins de l'ensemble des groupes (5a, 5b) de bobines.

3. Procédé selon l'une quelconque des revendications précédentes, dans lequel la tension d'alimentation devant être fournie à l'ensemble des groupes (5a, 5b) de bobines est la même tension d'alimentation, en amplitude et en phase, que la tension d'alimentation qui doit être fournie à moins de l'ensemble des groupes (5a, 5b) de bobines.

4. Procédé selon l'une quelconque des revendications précédentes, dans lequel la fourniture de la tension d'alimentation au premier nombre (5a) des groupes (5a, 5b) de bobines implique la commutation d'une tension d'une borne de tension au premier nombre (5a) de bobines ; et
dans lequel la fourniture de la tension d'alimentation à l'ensemble des groupes (5a, 5b) de bobines implique la commutation d'une tension d'une borne de tension à l'ensemble des groupes (5a, 5b) de bobines.

5. Procédé selon l'une quelconque des revendications précédentes, dans lequel une transition de la fourniture de la tension d'alimentation à moins de l'ensemble des groupes (5a, 5b) de bobines pendant une durée prédéterminée à la fourniture de la tension d'alimentation à l'ensemble des groupes (5a, 5b) de bobines est effectuée de manière non synchronisée par rapport à la phase de la tension d'alimentation.

6. Procédé selon l'une quelconque des revendications précédentes, dans lequel les groupes (5a, 5b) de bobines ont chacun le même nombre d'enroulements de bobines.

7. Procédé selon l'une quelconque des revendications précédentes, dans lequel un rapport du premier nombre (5a) de groupes de bobines à l'ensemble des groupes (5a, 5b) de bobines est inférieur à 1 ou inférieur à 1/12 ou inférieur à 1/16.

8. Procédé selon l'une quelconque des revendications précédentes, dans lequel la fourniture de la tension d'alimentation à l'ensemble des groupes (5a, 5b) de bobines est un fonctionnement ou un état de fonctionnement lors duquel les valeurs nominales du transformateur sont atteintes.

9. Procédé selon l'une quelconque des revendications précédentes, dans lequel la durée prédéterminée se situe dans une plage allant de 0,04 seconde à 5 secondes, ou en variante, dans une plage allant jusqu'à 30 secondes.

10. Ensemble de connexion de transformateur, comprenant :
un transformateur ayant au moins deux groupes (5a, 5b) de bobines formant des enroulements primaires de transformateur (5), la totalité des bobines formant lesdits groupes (5a, 5b) étant connectées ou connectables en parallèle les unes aux autres, et au moins un enroulement secondaire de transformateur (6), dans lequel les groupes (5a, 5b) de bobines sont disposés sur le transformateur de telle sorte que, dans un état de fonctionnement du transformateur, les groupes de bobines soient traversés par un flux magnétique commun ;
un premier commutateur (3), dans lequel, dans un état fermé du premier commutateur (3), une borne de tension d'alimentation (2) est connectée à un premier nombre (5a) des groupes de bobines, le premier nombre (5a) étant inférieur à l'ensemble des groupes (5a, 5b) de bobines ;
un second commutateur (4), dans lequel, dans un état fermé du second commutateur (4), la borne de tension d'alimentation (2) est connectée à l'ensemble (5a, 5b) des groupes de bobines ;
un dispositif de commande d'excitation (10) configuré pour mettre en œuvre le procédé selon l'une quelconque des revendications 1 à 9 précédentes.

11. Ensemble de connexion de transformateur selon la revendication 10, dans lequel le transformateur est un transformateur monophasé ou un transformateur de traction ou un transformateur de traction pour dispositif de traction de train électrique.

12. Ensemble de connexion de transformateur selon la revendication 10, dans lequel le transformateur est un transformateur d'isolation.

13. Ensemble de connexion de transformateur selon la revendication 10, dans lequel le transformateur est un transformateur polyphasé ou un transformateur de distribution.
